# EUROPEAN PATENT SPECIFICATION

(11) **EP 4 271 130 B1**
(45) Date of publication and mention of the grant of the patent: **15.07.2026**
(21) Application number: 23158928.4
(22) Date of filing: 28.02.2023
(51) Int. Cl.: H05B 6/10, H05B 6/40, A24F 40/465

(54) **ELECTRONIC ATOMIZATION DEVICE AND HEATING DEVICE THEREOF**
ELEKTRONISCHE ZERSTÄUBUNGSVORRICHTUNG UND HEIZVORRICHTUNG DAFÜR
DISPOSITIF D'ATOMISATION ÉLECTRONIQUE ET DISPOSITIF DE CHAUFFAGE ASSOCIÉ

(30) Priority: 29.04.2022 CN 202210465396
(43) Date of publication of application: 01.11.2023
(73) Proprietor: Shenzhen Smoore Technology Limited, Shenzhen, Guangdong 518102 (CN)
(72) Inventor: LI, Dandan, Shenzhen, 518102 (CN); LUO, Yongjie, Shenzhen, 518102 (CN)
(74) Representative: Westphal, Mussgnug & Partner, Patentanwälte mbB

(56) References cited:
- EP-A1- 3 768 100
- EP-A2- 2 770 858
- WO-A1-2019/238812
- WO-A1-2021/105482
- WO-A1-2022/064026
- WO-A2-2021/025363

## Description

### FIELD

The invention belongs to the technical field of atomization, and more particularly, relates to an electronic atomization device and a heating device thereof.

### BACKGROUND

The distribution of a temperature field of heat-not-burn (HNB) electronic atomization devices in the related art is determined after the heating unit is designed, and the temperature field is fixed and generally covers a large area of a solid aerosol-forming substrate, so a large amount of aerosol composition in the solid aerosol-forming substrate is released in the early stage, and the release of aerosol attenuates in the later stage. In addition, due to the fact that the fixed temperature field constantly bakes a fixed area of the solid aerosol-forming substrate, the solid aerosol-forming substrate may be scorched and produce a smell of burning.

In the related art, a segmental-type heating device with two or more segments of thick-film resistors or electromagnetic coils, which are separately controlled to be started at different times, is provided. However, although the two or more segments of resistors or electromagnetic coils can realize heating segment-by-segment, and the heating continuity is poor; the size of a PCBA will be increased due to the load of electric control, and more space will be occupied or the heating capacity is too high, which makes it difficult to realize small, light and thin products.

Publications WO 2021/105482 A1, WO 2021/025363 A2, WO 2019/238812 A1, EP 3 768 100 A1, EP 2 770 858 A2 and WO 2022/064026 A1 are considered to be relevant to the present application.

### SUMMARY

The technical issue to be settled by the invention is to overcome the defects in the prior art by providing an improved electronic atomization device and a heating device thereof. This problem is solved by a heating device having the features of claim 1, as well as by a heat-not-burn electronic atomization device having the features of claim 12.

The technical solution adopted by the invention to settle the above technical issue is as follows: providing a heating device, being used for an electronic atomization device, and comprising a support and a heating module. The heating module comprises a component, which is installed movably and enables the heating module to have a variable temperature field; the heating device further comprises a driving device which is connected to the component to drive the component to move.

Specifically, the driving device comprises a stretchable and/or movable first driving element which has an end connected to one end of the component.

Preferably, the first driving element is made of shape memory alloy.

In some embodiments, the driving device further comprises a stretchable and/or movable second driving element which has an end connected to the other end of the component.

Preferably, the second driving element is made of shape memory alloy.

Preferably, the first driving element and/or the second driving element are/is columnar springs, and are disposed around the support in a lengthwise direction.

In some embodiments, the component is stretchably and/or movably installed on the support.

In some embodiments, the component is an electromagnetic coil.

In some embodiments, the electromagnetic coil is stretchably and/or movably installed on the support in a lengthwise direction.

In some embodiments, the heating module further comprises a magnetic induction element matched with the component.

In some embodiments, the support defines a receiving cavity, and the magnetic induction element is disposed in the receiving cavity.

Preferably, the magnetic induction element is tubular or needle structure.

Specifically, the support is tubular.

In some embodiments, an HNB electronic atomization device is provided. The HNB electronic atomization device comprises any one of the heating devices described above.

Specifically, the HNB electronic atomization device comprises a power supply electrically connected to the heating device.

Preferably, a current of an output terminal of the power supply is 1-3A.

Specifically, the HNB electronic atomization device further comprises a shell, a hole is formed in a top of the shell and used for receiving the heating device.

The invention has the following beneficial effects: a movable component is provided for the heating module to produce a variable temperature field.

### BRIEF DESCRIPTION OF THE DRAWINGS

The invention will be further described below in conjunction with drawings and embodiments. In the drawings:
FIG. 1 is an assembled view of a combination of an HNB electronic atomization device and a solid aerosol-forming substrate;
FIG. 2 is a three-dimensional structural view of the HNB electronic atomization device and the solid aerosol-forming substrate in FIG. 1 in a separated state;
FIG. 3 is a sectional structural view of the HNB electronic atomization device in FIG. 1;
FIG. 4 is a sectional structural view of a heating device of the HNB electronic atomization device in FIG. 1;
FIG. 5a is a front structural view of the heating device according to one specific embodiment;
FIG. 5b is a state diagram of the heating device in FIG. 5a when the position of a component changes during the heating process;
FIG. 5c is another state diagram of the heating device in FIG. 5a when the position of a component changes during the heating process;
FIG. 6 is a front structural view of the heating device according to another specific embodiment.

Reference signs: 1, HNB electronic atomization device; 11, shell; 111, hole; 112, hole cover; 12, heating device; 121, driving device; 1211, first driving element; 1212, second driving element; 122, heating module; 1221, magnetic induction element; 1222, component; 123, support; 13, power supply; 14, main control board; 2, solid aerosol-forming substrate.

### DESCRIPTION OF THE EMBODIMENTS

For the sake of a better understanding of the technical features, purposes and effects of the invention, specific embodiments of the invention will be described in detail below with reference to the accompanying drawings.

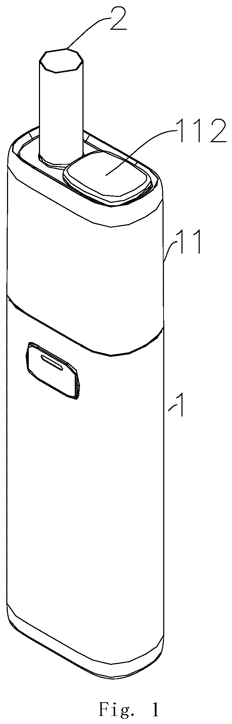

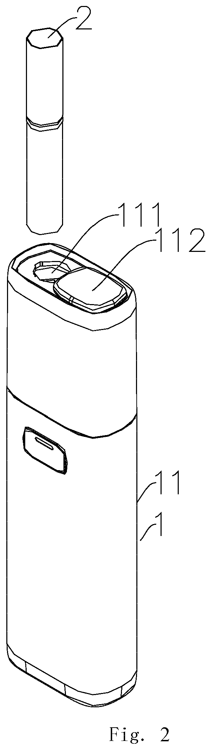

Referring to FIG. 1 and FIG. 2, some embodiments of the invention provide an HNB electronic atomization device 1, which is a segmental-type heating device with a movable temperature field, namely a heating device 12, and can perform heating segment-by-segment in a small area by moving the movable field, so as to generate lingering and odorless aerosol.

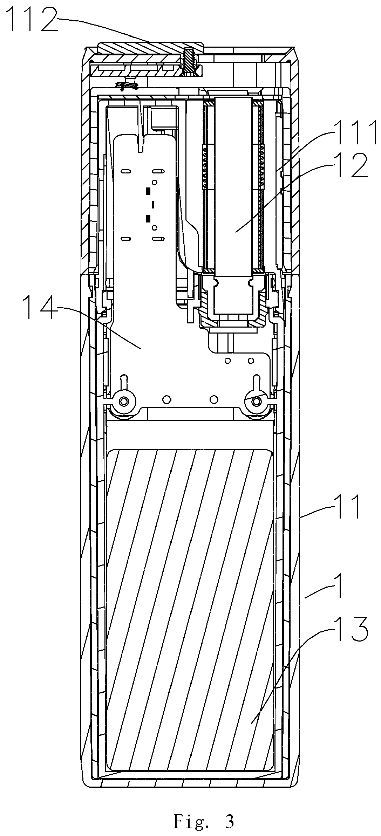

Referring to FIG. 3, the heating device 12 is used for heating and baking a solid aerosol-forming substrate 2 detachably inserted therein to release heated aerosol extractives of the solid aerosol-forming substrate 2 in a not-burning state. As shown in FIG. 1, the solid aerosol-forming substrate 2 may be cylindrical. Correspondingly, a hole 111 matching the solid aerosol-forming substrate 2 in size is formed in the top of the HNB electronic atomization device 1. A hole cover 112 may be disposed beside the hole 111 to cover or be buckled on the hole 111 so as to prevent foreign matter from entering the hole 111, which may otherwise affect the use of the HNB electronic atomization device 1.

Referring to FIG. 3 jointly, in some embodiments, the HNB electronic atomization device 1 may comprise a lengthwise shell 11, and the heating device 12, a power supply 13 and a main control board 14 which are disposed in the shell 11. Wherein, the heating device 12 and the main control board 14 are electrically connected to the power supply 13 respectively, and the main control board 14 is used for carrying circuit elements required by the HNB electronic atomization device 1 and arranging related circuits thereon. In some embodiments, the heating device 12 may be tubular, such that the solid aerosol-forming substrate 2 can be inserted into the heating device 12 to be heated and baked. In some embodiments, a current of an output terminal of the power supply 13 is 1-3A.

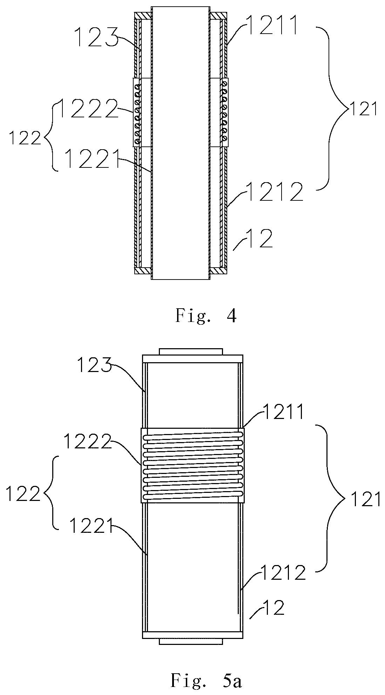

The connection relations, position relations and necessary movement relations in the heating device 12 will be specifically described below. As shown in FIG. 4, in some embodiments, the heating device 12 may comprise a driving device 121, a heating module 122 and a support 123. Wherein, the heating module 122 may comprise a component 1222 movably installed on the support 123, such that the heating device 12 has or forms a variable temperature field, and the solid aerosol-forming substrate 2 inserted in the heating device 12 can be uniformly heated. The driving device 121 is connected to the component 1222 and is used for driving the component 1222 to move on the support 123 to make the temperature field variable. In some embodiments, the support 123 may be a hollow cylindrical support and may be used for bearing or supporting the driving device 121 and the heating module 122.

In a specific embodiment, the heating device 12 realizes heating based on the electromagnetic induction principle, that is, the heating device 12 is an electromagnetic heating device. In this case, the component 1222 may be an electromagnetic coil which is movably or stretchably installed on the support 123, and correspondingly, the heating module 122 may further comprise a magnetic induction element 1221 matched with the electromagnetic coil. In some embodiments, the magnetic induction element 1221 may be tubular, and the electromagnetic coil can generate or release heat under the action of an alternating magnetic field to heat and atomize the solid aerosol-forming substrate 2 inserted therein. Wherein, because the electromagnetic coil is movable and/or stretchable with respect to the support 123 in a lengthwise direction, it can generate heat under the action of an electromagnetic induction system (from the low detailed description). It can be understood that the heating device is not limited to the electromagnetic heating device. In some other embodiments, the heating device may be resistor heating device, and correspondingly, the component 1222 of the heating device may be a resistor heating element.

In some embodiments, the component 1222, which is an electromagnetic coil, is disposed around the support 123 directly or indirectly, and the magnetic induction element 1221 penetrates through or is clamped in the support 123. Under the condition where the electromagnetic induction system formed by the electromagnetic coil and the magnetic induction element 1221 is connected to the power supply 13 in a constant voltage, constant power or constant pulse manner, the change of voltage is controlled to allow a current to pass through the electromagnetic coil (electric conductor), so as to produce a high-frequency alternating magnetic field in an induction coil; the magnetic force of the high-frequency alternating magnetic field first penetrates through the electromagnetic coil to generate a large quantity of circular vortexes; and a large amount of heat is released under the heat effect of the vortexes to enable the electromagnetic coil to generate heat at a high rate, such that the solid aerosol-forming substrate 2 is heated by the electromagnetic coil. Wherein, the magnetic induction element 1221 may be a stepped or tubular magnetic induction element to further improve the efficiency of heating the solid aerosol-forming substrate 2. It can be understood that, in some embodiments, the magnetic induction element 1221 may be disposed in the solid aerosol-forming substrate 2.

Referring to FIG. 5a, the driving device 121 may be formed integrally in some embodiments, or may be segmental. To fulfil better technical effects, the driving device 121 is preferably a segmental-type driving device. Wherein, the segmental-type driving device 121 comprises a first driving element 1211 and a second driving element 1212, and the first driving element 1211 and the second driving element 1212 are disposed on an upper portion and a lower portion of the support 123 respectively. Heights of the upper portion and the lower portion may be identical or different. For the sake of convenient fabrication, the heights of the upper portion and the lower portion are preferably identical, and correspondingly, heights of the first driving element 1211 and the second driving element 1212 are identical. The first driving element 1211 and the second driving element 1212 are connected directly or indirectly. Specifically, the first driving element 1211 and the second driving element 1212 may be connected in a clamped manner, a hooked manner, a screwed manner and so on, and in this case, the driving device 121 is disposed between the electromagnetic coil and the support 123. Or, the first driving element 1211 and the second driving element 1212 are connected through the electromagnetic coil, and in this case, the driving device 121 is disposed on a surface of the support 123.

Specifically, the driving device 121 comprises one or more first driving elements 1211 and one or more second driving elements 1212. For the sake of convenient installation and use, the driving device 121 preferably comprises one first driving element 1211 and one second driving element 1212. The first driving element 1211 and the second driving element 1212 are both made of shape memory alloy; or, one of the first driving element 1211 and the second driving element 1212 is made of shape memory alloy, and the other one is made of common alloy. In this embodiment, the first driving element 1211 and the second driving element 1212 may be stretchable shape memory alloy springs or wires, and after being electrified, the shape memory alloy springs or wires are driven to stretch to be 1%-400% of the initial or original length, and preferably, the stretchable shape memory alloy springs are driven to stretch to be 50%-100% of the initial length. Under the condition where the electromagnetic coil and the magnetic induction element 1221 work synchronously for heating, based on the principle mentioned above, the first driving element 1211 of the driving device 121 (comprising the first driving element 1211 and the second driving element 1212) and the electromagnetic coil stretch during the heating process, the electromagnetic coil also moves upward or downwards, and the second driving element 1212 contracts. In some embodiments, the first driving element 1211 and the second driving element 1212 are sleeve structures with a certain thickness, and are disposed around the upper portion and the lower portion of the support 123 respectively.

In some embodiments, the first driving element 1211 is made of shape memory alloy, and the second driving element 1212 is made of common alloy; or, the first driving element 1211 is made of common alloy, and the second driving element 1212 is made of shape memory alloy; or, the first driving element 1211 and the second driving element 1212 are both made of shape memory alloy and are in different phases of the shape memory effect, and specifically, the first driving element 1211 is in a heating phase, and the second driving element 1212 is in a heating end phase.

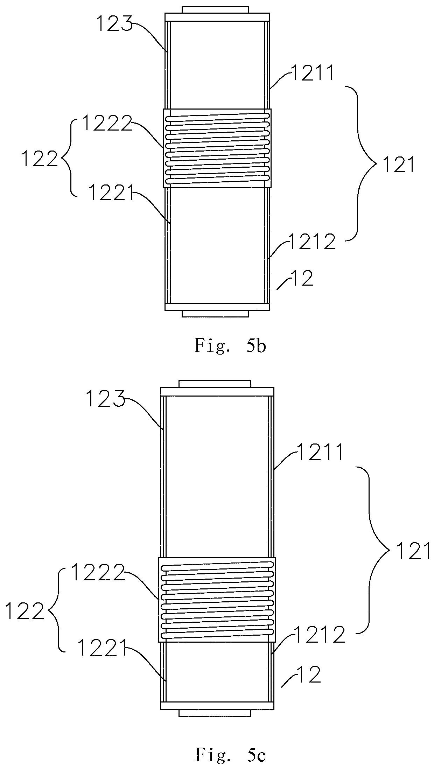

Referring to FIG. 5a, FIG. 5b and FIG. 5c, the length change trend of the first driving element 1211, the second driving element 1212 and the electromagnetic coil is briefly described below with quantizable data: assume, in the initial or original state, the length/height of the first driving element 1211 and the length/height of the second driving element 1212 are L1 and L2 respectively and the length of the electromagnetic coil is H1, in the initial stage of the heating process, the length of the first driving element 1211 and the length of the second driving element 1212 are L1-1 and L2-1 respectively, and the length of the electromagnetic coil is H1+1; in the later stage of the heating process, the length of the first driving element 1211 and the length of the second driving element 1212 are L1-2 and L2-2 respectively, and the length of the electromagnetic coil is H1+2; and at the end of the heating process, the length of the first driving element 1211 and the length of the second driving element 1212 are L1 and L2 respectively, and the length of the electromagnetic coil is H1.

Wherein, L1<L1-1<L1-2, L2>L2-1>L2-2, H1<H1+1<H1+2. It thus can be seen that the change trend of the length or height of the driving device 121 during the heating process conforms with the change trend under the shape memory effect described above.

The connection relation between the first driving element 1211, the second driving element 1212 and the support 123 is specifically described below: close ends of the first driving element 1121 and the second driving element 1212 are connected, and distant ends of the first driving element 1121 and the second driving element 1212 are connected to corresponding ends of the support 123 respectively.

In another specific embodiment different from the first embodiment, the heating device 12 comprises a magnetic induction element 1221 (the magnetic induction element 1221 has a heating function) and a component 1222.

Different from the first embodiment, in another specific embodiment (not shown in the drawings), that is, the technical solution implemented by electrifying a resistor body to enable the resistor body to generate heat, the heating module 122 in the heating device 12 only comprises the component 1222, wherein the component 1222 may be a resistor body such as a resistor block, which heats the solid aerosol-forming substrate 2 based on the shape memory alloy effect mentioned above.

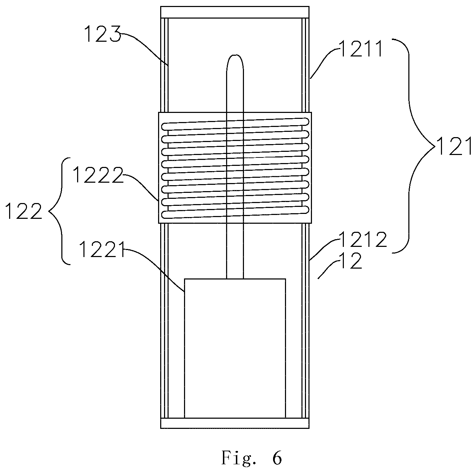

Referring to FIG. 6, in some other embodiments, the heating module 122 differs from the heating module 122 mentioned above mainly in the following aspects: the magnetic induction element 1221 is of a needle structure, is vertically disposed at the bottom of an inner cavity of the support 123, and is fixed to the support 123. When the solid aerosol-forming substrate 2 is inserted into the heating device 12, the needle-like magnetic induction element 1221 with a heating function is inserted into the solid aerosol-forming substrate 2 to further heat and bake solid aerosol-forming substrate 2.

As mentioned above, some embodiments of the invention provide a heating device which is provided with the first driving element, the second driving element, the magnetic induction element and the electromagnetic coil, wherein the driving device is connected to the electromagnetic coil directly or indirectly, and the magnetic induction element and the electromagnetic coil are combined to form the electromagnetic induction system; after the electromagnetic coil (electric conductor) is electrified, a high-frequency alternating magnetic field is produced in an induction coil, the magnetic force of the high-frequency alternating magnetic field penetrates through the electromagnetic coil to generate a large quantity of circular vortexes, and a large amount of heat is released under the heat effect of the vortexes to enable the electromagnetic coil to generate heat at a high rate, such that the solid aerosol-forming substrate 2 is heated by the electromagnetic coil.

As mentioned above, in some embodiments of the invention, the driving device may be made of shape memory alloy, and after the driving device is electrified, a resistor of the driving device generates heat to enable the driving device to stretch or contract, which in turn drives the electromagnetic coil to move upwards or downwards. The driving device can deform when heated, and when the driving device is heated to a certain temperature, the alloy can restore to the original shape before deformation, and can drive the electromagnetic coil to move upwards or downwards, or drive the electromagnetic coil to move to a fixed position and maintain the electromagnetic coil at this position for a period of time, such that characteristic control of the temperature field is realized.

## Claims

1. A heating device (12), being used for an electronic atomization device, and comprising a support (123) and a heating module (122), wherein the heating module (122) comprises a component (1222), which is installed movably and enables the heating module (122) to have a variable temperature field; the heating device (12) further comprises a driving device (121) which is connected to the component (1222) to drive the component (1222) to move;
wherein the driving device (121) comprises a stretchable and/or movable first driving element (1211) which has an end connected to one end of the component (1222);
**characterized in that** the driving device (121) further comprises a stretchable and/or movable second driving element (1212) which has an end connected to the other end of the component (1222); and
wherein the first driving element (1211) and the second driving element (1212) are disposed on an upper portion and a lower portion of the support (123) respectively.

2. The heating device according to Claim 1, **characterized in that** the first driving element (1211) is made of shape memory alloy.

3. The heating device according to Claim 1, **characterized in that** the second driving element (1212) is made of shape memory alloy.

4. The heating device according to Claim 1, **characterized in that** the first driving element (1211) and/or the second driving element (1212) are/is columnar springs, and are disposed around the support (123) in a lengthwise direction.

5. The heating device according to Claim 1, **characterized in that** the component (1222) is stretchably and/or movably installed on the support (123).

6. The heating device according to Claim 1, **characterized in that** the component (1222) is an electromagnetic coil.

7. The heating device according to Claim 6, **characterized in that** the electromagnetic coil is stretchably and/or movably installed on the support (123) in a lengthwise direction.

8. The heating device according to Claim 1, **characterized in that** the heating module (122) further comprises a magnetic induction element (1221) matched with the component (1222).

9. The heating device according to Claim 8, **characterized in that** the support (123) defines a receiving cavity, and the magnetic induction element (1221) is disposed in the receiving cavity.

10. The heating device according to Claim 8, **characterized in that** the magnetic induction element (1221) is tubular or needle structure.

11. The heating device according to Claim 1, **characterized in that** the support (123) is tubular.

12. An HNB Heat-not-Burn electronic atomization device (1), **characterized by** comprising the heating device (12) according to any one of Claims 1-11.

13. The HNB electronic atomization device according to Claim 12, **characterized by** comprising a power supply (13) electrically connected to the heating device (12).

14. The HNB electronic atomization device according to Claim 13, **characterized in that** a current of an output terminal of the power supply (13) is 1-3A.

15. The HNB electronic atomization device according to Claim 12, **characterized in that** the HNB electronic atomization device (1) further comprises a shell (11), a hole (111) is formed in a top of the shell (11) and used for receiving the heating device (12).

## Patentansprüche

1. Heizvorrichtung (12), die für eine elektronische Zerstäubungsvorrichtung verwendet wird und einen Träger (123) und ein Heizmodul (122) umfasst, wobei das Heizmodul (122) eine Komponente (1222) umfasst, die beweglich installiert ist und es dem Heizmodul (122) ermöglicht, ein variables Temperaturfeld aufzuweisen; wobei die Heizvorrichtung (12) ferner eine Antriebsvorrichtung (121) umfasst, die mit der Komponente (1222) verbunden ist, um die Komponente (1222) anzutreiben, sich zu bewegen;
wobei die Antriebsvorrichtung (121) ein dehnbares und/oder bewegliches erstes Antriebselement (1211) umfasst, das ein Ende aufweist, das mit einem Ende der Komponente (1222) verbunden ist;
**dadurch gekennzeichnet, dass**
die Antriebsvorrichtung (121) ferner ein dehnbares und/oder bewegliches zweites Antriebselement (1212) umfasst, das ein Ende aufweist, das mit dem anderen Ende der Komponente (1222) verbunden ist; und
wobei das erste Antriebselement (1211) und das zweite Antriebselement (1212) an einem oberen Abschnitt bzw. einem unteren Abschnitt des Trägers (123) angeordnet sind.

2. Heizvorrichtung nach Anspruch 1, **dadurch gekennzeichnet, dass** das erste Antriebselement (1211) aus einer Formgedächtnislegierung hergestellt ist.

3. Heizvorrichtung nach Anspruch 1, **dadurch gekennzeichnet, dass** das zweite Antriebselement (1212) aus einer Formgedächtnislegierung hergestellt ist.

4. Heizvorrichtung nach Anspruch 1, **dadurch gekennzeichnet, dass** das erste Antriebselement (1211) und/oder das zweite Antriebselement (1212) säulenförmige Federn ist/sind und in Längsrichtung um den Träger (123) angeordnet sind.

5. Heizvorrichtung nach Anspruch 1, **dadurch gekennzeichnet, dass** die Komponente (1222) dehnbar und/oder beweglich auf dem Träger (123) installiert ist.

6. Heizvorrichtung nach Anspruch 1, **dadurch gekennzeichnet, dass** die Komponente (1222) eine elektromagnetische Spule ist.

7. Heizvorrichtung nach Anspruch 6, **dadurch gekennzeichnet, dass** die elektromagnetische Spule in Längsrichtung dehnbar und/oder beweglich auf dem Träger (123) installiert ist.

8. Heizvorrichtung nach Anspruch 1, **dadurch gekennzeichnet, dass** das Heizmodul (122) ferner ein magnetisches Induktionselement (1221) umfasst, das auf die Komponente (1222) abgestimmt ist.

9. Heizvorrichtung nach Anspruch 8, **dadurch gekennzeichnet, dass** der Träger (123) einen Aufnahmehohlraum definiert und das magnetische Induktionselement (1221) in dem Aufnahmehohlraum angeordnet ist.

10. Heizvorrichtung nach Anspruch 8, **dadurch gekennzeichnet, dass** das magnetische Induktionselement (1221) eine röhren- oder nadelförmige Struktur aufweist.

11. Heizvorrichtung nach Anspruch 1, **dadurch gekennzeichnet, dass** der Träger (123) rohrförmig ist.

12. Elektronische HNB-Heat-not-Burn-Zerstäubungsvorrichtung (1), **dadurch gekennzeichnet, dass** sie die Heizvorrichtung (12) nach einem der Ansprüche 1-11 umfasst.

13. Elektronische HNB-Zerstäubungsvorrichtung nach Anspruch 12, **dadurch gekennzeichnet, dass** sie eine Stromversorgung (13) umfasst, die elektrisch mit der Heizvorrichtung (12) verbunden ist.

14. Elektronische HNB-Zerstäubungsvorrichtung nach Anspruch 13, **dadurch gekennzeichnet, dass** ein Strom eines Ausgangsanschlusses der Stromversorgung (13) 1-3 A beträgt.

15. Elektronische HNB-Zerstäubungsvorrichtung nach Anspruch 12, **dadurch gekennzeichnet, dass** die elektronische HNB-Zerstäubungsvorrichtung (1) ferner ein Gehäuse (11) umfasst, wobei ein Loch (111) in einer Oberseite des Gehäuses (11) ausgebildet ist und zum Aufnehmen der Heizvorrichtung (12) verwendet wird.

## Revendications

1. Dispositif de chauffage (12), qui est utilisé pour un dispositif d'atomisation électronique, et comprenant un support (123) et un module de chauffage (122), dans lequel le module de chauffage (122) comprend un composant (1222), qui est installé mobile et permet au module de chauffage (122) d'avoir un champ de température variable ; le dispositif de chauffage (12) comprend en outre un dispositif d'entraînement (121) qui est relié au composant (1222) pour entraîner le déplacement du composant (1222) ;
dans lequel le dispositif d'entraînement (121) comprend un premier élément d'entraînement extensible et/ou mobile (1211) dont une extrémité est reliée à une extrémité du composant (1222) ;
**caractérisé en ce que**
le dispositif d'entraînement (121) comprend en outre un second élément d'entraînement extensible et/ou mobile (1212) dont une extrémité est reliée à l'autre extrémité du composant (1222) ; et
dans lequel le premier élément d'entraînement (1211) et le second élément d'entraînement (1212) sont disposés respectivement sur une partie supérieure et une partie inférieure du support (123).

2. Dispositif de chauffage selon la revendication 1, **caractérisé en ce que** le premier élément d'entraînement (1211) est constitué d'un alliage à mémoire de forme.

3. Dispositif de chauffage selon la revendication 1, **caractérisé en ce que** le second élément d'entraînement (1212) est constitué d'un alliage à mémoire de forme.

4. Dispositif de chauffage selon la revendication 1, **caractérisé en ce que** le premier élément d'entraînement (1211) et/ou le second élément d'entraînement (1212) est/sont des ressorts colonnaires et est/sont disposés autour du support (123) dans le sens de la longueur.

5. Dispositif de chauffage selon la revendication 1, **caractérisé en ce que** le composant (1222) est installé de manière extensible et/ou mobile sur le support (123).

6. Dispositif de chauffage selon la revendication 1, **caractérisé en ce que** le composant (1222) est une bobine électromagnétique.

7. Dispositif de chauffage selon la revendication 6, **caractérisé en ce que** la bobine électromagnétique est installée de manière extensible et/ou mobile sur le support (123) dans le sens de la longueur.

8. Dispositif de chauffage selon la revendication 1, **caractérisé en ce que** le module de chauffage (122) comprend en outre un élément d'induction magnétique (1221) adapté au composant (1222).

9. Dispositif de chauffage selon la revendication 8, **caractérisé en ce que** le support (123) définit une cavité de réception et que l'élément d'induction magnétique (1221) est disposé dans la cavité de réception.

10. Dispositif de chauffage selon la revendication 8, **caractérisé en ce que** l'élément d'induction magnétique (1221) est de structure tubulaire ou à aiguille.

11. Dispositif de chauffage selon la revendication 1, **caractérisé en ce que** le support (123) est tubulaire.

12. Dispositif d'atomisation électronique à chauffage sans combustion (HNB) (1), **caractérisé en ce qu'**il comprend le dispositif de chauffage (12) selon l'une quelconque des revendications 1 à 11.

13. Dispositif d'atomisation électronique HNB selon la revendication 12, **caractérisé en ce qu'**il comprend une alimentation électrique (13) connectée électriquement au dispositif de chauffage (12).

14. Dispositif d'atomisation électronique HNB selon la revendication 13, **caractérisé en ce qu'**un courant d'une borne de sortie de l'alimentation électrique (13) est de 1 à 3 A.

15. Dispositif d'atomisation électronique HNB selon la revendication 12, **caractérisé en ce que** le dispositif d'atomisation électronique HNB (1) comprend en outre une coque (11), un trou (111) est formé dans une partie supérieure de la coque (11) et utilisé pour recevoir le dispositif de chauffage (12).
